# EUROPÄISCHE PATENTSCHRIFT

(11) **EP 1 958 974 B1**
(45) Veröffentlichungstag und Bekanntmachung des Hinweises auf die Patenterteilung: **08.04.2020**
(21) Anmeldenummer: 08001459.0
(22) Anmeldetag: 26.01.2008
(51) Int. Cl.: C08G 18/08, C08G 18/12, C08G 18/28, C08G 18/32, C08G 18/34, C08G 18/72, C08G 18/75, C08G 18/79, C09D 175/16, C08G 18/67

(54) **UV-HÄRTBARE DISPERSIONEN AUF BASIS VON POLYISOCYANATEN**
UV HARDENING DISPERSIONS BASED ON POLYISOCYANTES
DISPERSIONS DURCISSABLES PAR UV À BASE DE POLYSOCYANATES

(30) Priorität: 09.02.2007 DE 102007006492
(43) Veröffentlichungstag der Anmeldung: 20.08.2008
(73) Patentinhaber: Covestro Deutschland AG, 51373 Leverkusen (DE)
(72) Erfinder: Blum, Harald, Dr., 51375 Leverkusen (DE); Luehmann, Erhard, 29699 Bomlitz (DE); Sommer, Stefan, Dr., 51373 Leverkusen (DE); Irle, Christoph, Dr., 41539 Dormagen (DE)
(74) Vertreter: Levpat

(56) Entgegenhaltungen:
- EP-A- 0 704 469
- EP-A- 0 742 239
- WO-A-2006/138557
- US-A1- 2004 006 152

## Beschreibung

Die Erfindung betrifft neue UV-härtbare Dispersionen auf Basis von Polyisocyanaten, ein Verfahren zu deren Herstellung und Verwendung zur Herstellung von Beschichtungsmitteln, insbesondere von Beschichtungen für holzartige Substrate.

UV-härtbare Dispersionen nach dem Stand der Technik enthalten sehr häufig Polyesteracrylat-Komponenten als wesentliche Bausteine. Diese Polyesterstrukturen sind potentielle Schwachpunkte, da Esterbindungen eine inhärente Hydrolyseanfälligkeit aufweisen. Andere Dispersionen nach dem Stand der Technik enthalten größere Mengen an Polyether-Bestandteilen, sei es in das Polymere eingebaut oder als externe, als Emulgator bzw. Stabilisator wirkende Substanzen. Solche Polyetherstrukturen führen, insbesondere falls sie in größeren Mengen enthalten sind, bei den Beschichtungen häufig zu erhöhten Empfindlichkeiten z.B. gegenüber färbenden Flüssigkeiten und haben auch Nachteile in der Bewitterungsstabilität, es kann zur Kreidung der Beschichtung kommen.

In der EP 1 118 627 A1 werden witterungsstabile, wasserdispergierbare, strahlungshärtbare Polyurethane, aufgebaut im wesentlichen aus aliphatischen oder alicyclischen Polyisocyanaten, cycloaliphatischen Diolen und/oder cycloaliphatischen Diaminen, ungesättigte Gruppen enthaltende Verbindungen und Verbindungen mit einer dispergieraktiven Gruppe beschrieben. Die Polyurethane enthalten kurzkettige, cycloaliphatische Diole oder Diamine als wesentliche Aufbaukomponente. Als mögliche cycloaliphtische Diamine werden Methylen- oder Isopropyliden-bis(cyclohexylamin), Piperazin, 1,4-Diaminocyclohexan oder 1,4-Bisaminomethylcyclohexan genannt. Als hydrophile Komponente weisen diese ausschließlich ionisch-hydrophilierende Bausteine auf. Nachteilig an den dort offenbarten Polyurethanen ist deren hoher Anteil an cycloaliphatischen Diolen. Dies führt zu Beschichtungen mit nur sehr eingeschränkter Elastizität. Solche Beschichtungen sind für eine Anwendung auf Holz oder Kunststoff in der Regel nicht geeignet. Außerdem ist die Reaktivität dieser Dispersionen für viele Anwendungen, insbesondere in der industriellen Holz- und Möbelbeschichtung nicht immer ausreichend. Die in den Beispielen erzielten Pendelhärten (Beispiel 1: 114 Pendelsekunden) sind nicht besonders hoch und für Holzbeschichtungen nicht immer ausreichend.

WO 01/23453 A1 beschreibt durch UV-Strahlung und thermisch härtende, wässrige Polyurethandispersionen, die neben mit UV-Strahlung polymerisierbaren Doppelbindungen noch blockierte Isocyanatgruppen und außerdem freie Hydroxylgruppen aufweisen. Solche Dual Cure Systeme benötigen zur Aushärtung durch Reaktion der blockierten Polyisocyanatgruppen erhöhte Temperaturen, in der Regel über 100°C, wodurch die Anwendung für temperaturempfindliche Substrate wie Holz oder Kunststoffe stark eingeschränkt bzw. nicht möglich ist. Offenbart wird die Beschichtung thermostabiler Substrate wie metallische Untergründe für die Automobillackierung. Eine Kettenverlängerungsreaktion mit Di- bzw. Polyaminen zum Aufbau höhermolekularer Polyurethane wird nicht offenbart.

EP 0 704 469 A2 offenbart strahlungshärtbare, wässrige Polyurethandispersionen auf Basis von Polyesterpolyolen mit einer gezielt erzeugten, breiten Molekulargewichtsverteilung. Bausteine zur Kettenverlängerung werden nur als optionale Komponente offenbart.

EP 0 704 469 A1, WO 2006/138557 A1, EP 0 742 239 A1 und US 2004/006152 A offenbaren wässrige Dispersionen, die durch energiereiche Strahlung, insbesondere UV-Strahlung, gehärtet werden können.

Aufgabe der vorliegenden Erfindung bestand in der Bereitstellung von wässrigen, durch energiereiche Strahlung, insbesondere UV-Strahlung härtbare Dispersionen, die eine ausgezeichnete Anfeuerung von Holzuntergründen zeigen, hohe Reaktivitäten aufweisen und die Herstellung von Beschichtungen mit ausgezeichneter Hydrolysebeständigkeiten, exzellenter Chemikalienfestigkeit, insbesondere gegenüber färbenden Flüssigkeiten und sehr hohe Härten ermöglichen. Darüber hinaus sollten solche Dispersionen einfach und schnell herstellbar sein, möglichst wenig flüchtige organische Substanzen wie Lösemittel oder Neutralisationsmittel enthalten und eine ausgezeichnete Dispersionsstabilität, insbesondere in Bezug auf Änderungen der mittleren Teilchengröße der Dispersionen bei Lagerung, Scher- und Temperaturbeanspruchung aufweisen. Des Weiteren sollen die Dispersionen eine gute Reemulgierbarkeit aufweisen, damit z.B. angetrocknete Filmreste auf Applikationsanlagen leicht wieder durch Reemulgierung mit Wasser bzw. mit Wasser, welches geringe Mengen Neutralisationsmittel enthält, wieder entfernt und gegebenenfalls wiederverwertet werden können.

Überraschenderweise wurde gefunden, dass UV-härtbare Dispersionen auf Basis von Polyisocyanatbasis, die als Polyisocyanat oligomere Polyisocyanate des Hexamethylendiisocyanats mit Urethan-, Biuret-, Iminooxadiazindion- und/oder Isocyanuratstruktureinheiten als Aufbaukomponente aufweisen und welche Di-, Polyamine oder Hydroxyamine als Kettenverlängerungsbausteine enthalten, die oben genannte Aufgabe erfüllen.

Gegenstand der Erfindung sind somit wässrige UV-härtbare Dispersionen auf Polyisocyanatbasis als Bindemittel für die Herstellung von Lacken, enthaltend als Aufbaukomponenten
a) 35 bis 75 Gew. -% einer Polyisocyanatkomponente a) mit einer durchschnittlichen Funktionalität von mindestens 2,2, bestehend zu mindestens 40 Gew. -% aus flüssigen oligomeren Polyisocyanaten auf Basis von Hexamethylendiisocyanat mit Isocyanurat-, Biuret-, Uretdion-, Carbodiimid- und/oder Iminooxadiazindion- Struktureinheiten und zu höchstens 60 Gew. -% aus Isophorondiisocyanat, H6-2,4- bzw. 2,6- Toluylidendiisocyanat, 1,6-Hexamethylendiisocyanat, 4,4'-Diisocyanato-dicyclohexylmethan und/oder 2,4'-Diisocyanato-dicyclohexylmethan und/oder 2,2'-Diisocyanato-dicyclohexyl-methan und/oder 2,4- bzw. 2,6- Toluylidendiisocyanat bzw. deren Umsetzungsprodukte mit Trimethylolpropan, Butandiol, Ethylenglykol, Diethylenglykol, Propylenglykol oder Neopentylglykol,
b) 10 bis 50 Gew. -% ein oder mehrere monohydroxyfunktionelle, (Meth)acryloylgruppen aufweisende Verbindungen,
c) 1,5 bis 19 Gew. -% einer Komponente c), wobei die Komponente c) mindestens eine Komponente c1), die auf Grund eingebauter (potentiell) ionischer Gruppen hydrophilierend wirkt und mindestens eine weitere isocyanatreaktive Gruppe aufweist und mindestens eine Komponente c2), die nichtionisch hydrophilierend wirkende Gruppen enthält und mindestens eine weitere isocyanatreaktive Gruppe aufweist, enthält,
d) 0,1 bis 10 Gew. -% ein oder mehrere di- und/oder polyfunktionellen Amine oder Hydroxyamine als Kettenverlängerer, und
e) gegebenenfalls sonstige monomere, oligomere und/oder polymere Substanzen, die gegebenenfalls auch weitere ungesättigte Gruppen aufweisen können, ausgewählt aus niedermolekularen Diolen und/oder Polymerdiolen oder Epoxyacrylaten, Esteracrylaten, Polyesteracrylaten und/oder Umsetzungsprodukten aus Monoepoxiden mit ungesättigte Fettsäuren,
wobei sich die Prozentangaben zu a) bis d) zu 100% ergänzen und die das Verhältnis der Äquivalente der Isocyanatgruppen der Komponente a) zur Summe der Äquivalente der isocyanatreaktiven Hydroxy- und/oder Aminogruppen der Komponenten b), c) und gegebenenfalls e) zwischen 0,95:1 und 1,39:1 liegt, und wobei die UV-härtbaren Dispersionen auf Polyisocyanatbasis durch Einbau von Komponente c) Säurezahlen von 0 bis 26 KOH/g Substanz, bezogen auf Feststoffgehalt, aufweisen, der Urethangruppengehalt im Bereich von 8 bis 30 Gew. -%, bezogen auf Feststoffgehalt, liegt, und die UV-härtbaren Dispersionen auf Polyisoscyanatbasis weniger als 5 Gew.-% an organischen Lösemitteln enthalten.

Die erfindungsgemäßen Dispersionen weisen somit ein Polyurethanpolyacrylat-Polymer auf, welches durch energiereiche Strahlung oder z.B. durch Zugabe von peroxidischen Härtern oder Härtern auf Azobasis polymerisierbare Acrylatgruppen und keine freien Isocyanatgruppen mehr enthält.

Die erfindungsgemäßen UV-härtbaren Dispersionen auf Polyisocyanatbasis enthalten
35 bis 75 Gew. -%, bevorzugt 40 bis 75 Gew.-%, besonders bevorzugt 45 bis 75 Gew.-% an Komponente a),
10 bis 50 Gew. -%, bevorzugt 12 bis 35 Gew.-%, besonders bevorzugt 14 bis 32 Gew.-% an Komponente b),
1,5 bis 19 Gew. -%, bevorzugt 2 bis 13 Gew.-%, besonders bevorzugt 2 bis 9 Gew.-% an Komponente c),
0,1 bis 10 Gew. -%, bevorzugt 0,1 bis 9 Gew.-%, besonders bevorzugt 0,1 bis 5 Gew.-% an Komponente d),
wobei sich die Prozentangaben zu a) bis d) zu 100% ergänzen.

In einer bevorzugten Ausführungsform enthalten die erfindungsgemäßen UV-härtbaren Dispersionen auf Polyisocyanatbasis 0,5 bis 40 Gew.%, bevorzugt 0,5 bis 25 Gew.% an Komponente e).

Die erfindungsgemäßen UV-härtbaren Dispersionen auf Polyisocyanatbasis enthalten bevorzugt mindestens einen Initiator und gegebenenfalls weitere Hilfsmittel und Zusatzstoffe, die eine Aushärtung mit energiereicher Strahlung, wie z.B. Elektronenstrahlen oder UV-Strahlen ermöglichen bzw. beschleunigen.

Die erfindungsgemäßen UV-härtbaren Dispersionen auf Polyisocyanatbasis weisen durch Einbau von Komponente(n) c) Säurezahlen von 0 bis 26, bevorzugt 3 bis 20 und besonders bevorzugt von 5 bis 16 mg KOH/g Substanz auf, bezogen auf Feststoffgehalt.

Der Urethangruppengehalt (MG Urethangruppe = 59 g/mol) liegt im Bereich von 8 bis 30 Gew. -%, bevorzugt von 15 bis 25 Gew. -%, bezogen auf Feststoffgehalt.

Geeignete Polyisocyanate a) sind neben dem oligomeren Polyisocyanaten des Hexamethylendiisocyanats mit Urethan-, Biuret-, Iminooxadiazindion- und/oder Isocyanuratstruktureinheiten mindestens difunktionelle Polyisocyanate wie z.B. 1,4-, 1,3-, und/oder 1,2-Cyclohexandiisocyanat, 1-Methyl-2,4-diisocyanato-cyclohexan, 1-Methyl-2,6-diisocyanato-cyclohexan, Tetramethylendiisocyanat, Octamethylendiisocyanat, Decamethylendiisocyanat, Dodecamethylendiisocyanat, H₆- 2,4- und/oder 2,6- Diisocyanatotoluol, 4,4'-Diisocyanatodiphenylmethan, 2,4'-Diisocyanatodiphenylmethan, 2,2'- Diisocyanatodiphenylmethan, meta- und/oder para-Xylylendiisocyanat, 2,4-Diisocyanatotoluol und/oder 2,6-Diisocyanatotoluol, Isopropenyldimethyltoluylendiisocyanat, α,α,α,'α,'-Tetra-methyl-mund/oder p-Xylylendiisocyanat ,1,6-Hexamethylendiisocyanat, Trimethylhexandiisocyanat, Tetramethylhexandiisocyanat, Nonantriisocyanat, 1-Isocyanato-3,3,5-trimethyl-5-isocyanatomethylcyclohexan (Isophorondiisocyanat), 4,4'-Diisocyanato-dicyclohexylmethan und/oder 2,4'-Diisocyanato-dicyclohexylmethan und/oder 2,2'-Diisocyanato-dicyclohexylmethan sowie Gemische dieser Diisocyantodicyclohexylmethane und deren Mono- und Dimethylsubstituierten Derivate, und/oder höherfunktionelle Umsetzungsprodukte, Homologe, Oligomere und/oder Polymere der genannten mindestens difunktionellen Polyisocyanate mit Urethan-, Biuret-, Carbodiimid-, Isocyanurat-, Allophanat-, Iminooxadiazindion- und/oder Uretdionstruktureinheiten. Es können anteilig auch monofunktionelle Isocyanate, wie z.B. Stearylisocyanat, Butylisocyanat, Phenylisocyanat, oder andere wie z.B. 3-Isocyanatopropyl-trialkoxysilan mitverwendet werden.

Die durchschnittliche Funktionalität der Polyisocyanatkomponente a) beträgt mindestens 2,2 bis 6, bevorzugt 2,4 bis 5, besonders bevorzugt 2,6 bis 4,5.

Die Polyisocyanat-Komponente a) weist bevorzugt eine Viskosität von weniger als 25000 mPas bei 23°C, besonders bevorzugt von weniger als 15000 mPas bei 23°C auf.

Die Polyisocyanatkomponente a) besteht zu mindestens 40 Gew. -% aus flüssigen oligomeren Polyisocyanaten auf Basis von Hexamethylendiisocyanat mit Isocyanurat-, Biuret-, Uretdion-, Carbodiimid- und/oder Iminooxadiazindion-Struktureinheiten und zu höchstens 60 Gew. -% aus Isophorondiisocyanat, H₆-2,4- bzw. 2,6-Toluylidendiisocyanat, 1,6-Hexamethylendiisocyanat, 4,4'-Diisocyanato-dicyclohexylmethan und/oder 2,4'-Diisocyanato-dicyclohexylmethan und/oder 2,2'-Diisocyanato-dicyclohexyl-methan und/oder 2,4- bzw. 2,6- Toluylidendiisocyanat bzw. deren Umsetzungsprodukte mit Trimethylolpropan, Butandiol, Ethylenglykol, Diethylenglykol, Propylenglykol oder Neopentylglykol.

Bevorzugt besteht die Polyisocyanatkomponente a) zu mindestens 70 Gew.- % aus oligomeren Polyisocyanaten auf Basis von Hexamethylendiisocyanat mit Biuret-, Iminooxadiazindion- und/oder Isocyanuratstruktureinheiten und zu höchsten 30 Gew.-% aus Isophorondiisocyanat, 4,4 '-Diisocyanato-dicyclohexylmethan und/oder 2,4 '-Diisocyanato-dicyclohexylmethan und/oder 2,2'-Diisocyanato-dicyclohexyl-methan und/oder 2,4- bzw. 2,6- Toluylidendiisocyanat.

Geeignete Komponenten b) sind monohydroxyfunktionelle (Meth)acryloylgruppen aufweisende Verbindungen wie z.B. Hydroxylethylacrylat, 2-/3-Hydroxypropylacrylat, Hydroxybutylacrylat, 2-/3-/4-Hydroxyethylmethacrylat, 2-/3-Hydroxypropylmethacrylat, 2-/3-/4-Hydroxybutylmethacrylat, Ethoxylierungs- und/oder Propoxylierungsprodukte der genannten Hydroxyacrylate bzw. Hydroxymethacrylate, Umsetzungsprodukte von Trimethylopropan, Glycerin und/oder Pentaerythrit bzw. deren Ethoxylierungs- und/oder Propoxylierungsprodukte mit 2 oder 3 Equivalenten Acrylsäure und/oder Methacrylsäure, Umsetzungsprodukte der genannten Hydroxyacrylate bzw. Hydroxymethacrylate mit Caprolacton, Umsetzungsprodukte von Monoepoxiden wie z.B. Cardura E10 ® [Monoepoxid, Hexion Speciality Chemicals, Niederlande]mit Acrylsäure und/oder Methacrylsäure und Mischungen der genannten monohydroxyfunktionellen (Meth)acryloylgruppen aufweisenden Verbindungen.

Bevorzugt werden Hydroxyethylacrylat, Hydroxypropylacrylat und/oder Hydroxybutylacrylat eingesetzt.

Die erfindungsgemäßen UV-härtbaren Dispersionen auf Polyisocyanatbasis enthalten mindestens 2 verschiedene hydrophilierend wirkende Komponenten c), nämlich mindestens eine Komponente c1) mit mindestens einer isocyanatreaktiven Gruppe, bevorzugt Amino- und/oder Hydroxylgruppe, und mindestens einer eingebauten (potentiell) ionischen Gruppe (Salzgruppe), bevorzugt Carboxylgruppe, sowie mindestens eine Komponente c2), die neben einer oder zwei, bevorzugt einer, isocyanatreaktiven Gruppe, nichtionisch hydrophilierende Struktureinheiten, bevorzugt auf Polyalkylenoxidbasis, aufweist.

Geeignete Komponenten c1) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder butylsulfonsäure, 1,2- oder 1,3-Propylendiamin-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von 2-(2-Amino-ethylamino) -ethansulfonsäure oder des Additionsproduktes von Diaminen wie z.B. Ethlendiamin oder Isophorondiamin und Acrylsäure (EP-A 0 916 647, Beispiel 1) sowie der Dimethylolpropionsäure.

Geeignete nichtionisch hydrophilierend wirkende Komponenten c2) sind z.B. Polyoxyalkylenether, die mindestens eine Hydroxy- oder Aminogruppe enthalten. Diese Polyether enthalten einen Anteil von 30 Gew. -% bis 100 Gew. -% an Bausteinen, die vom Ethylenoxid abgeleitet sind. In Frage kommen linear aufgebaute Polyether einer Funktionalität zwischen 1 und 3, aber auch Verbindungen der allgemeinen Formel (I), 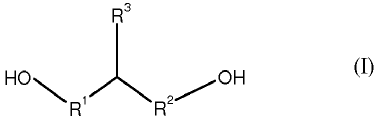 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen alkoxyterminierten Polyethylenoxidrest steht.

Nichtionisch hydrophilierend wirkende Verbindungen sind beispielsweise auch einwertige, im statistischen Mittel 5 bis 70 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykolmonoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonomethyl-, -monoethyl- bzw. - monobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol -% bevorzugt zu mindestens 50 mol -% aus Ethylenoxideinheiten bestehen.

Bevorzugte nichtionische Verbindungen c1) sind monohydroxyfunktionelle Polyalkylenoxidpolyether, die mindestens 75 mol -% Ethylenoxid-, besonders bevorzugt 100 mol -% Ethylenoxideinheiten und ein Molekulargewicht von 350 bis 2500, besonders bevorzugt von 500 bis 1100 g/Mol aufweisen.

Bevorzugt ist die Verwendung einer Mischung aus Komponenten c1) und c2), besonders bevorzugt die Verwendung von 1 bis 8 Gew. -% einer Mischung aus Salzen von 2-(2-Amino-ethylamino-)-ethansulfonsäure und/oder des Additionsproduktes von Diaminen wie z.B. Ethlendiamin oder Isophorondiamin mit Acrylsäure und/oder Dimethylolpropionsäure als Komponente c1) mit mindestens einem monohydroxyfunktionellen Polyalkylenoxidpolyether des Molekulargewichts von 500 bis 1100 g/Mol als Komponente c2).

Geeignete, mitzuverwendende Komponenten d) sind di- und/oder trifunktionelle Amine bzw. Hydroxyamine, die zur Kettenverlängerung bzw. zum Molekulargewichtsaufbau dienen. Durch die Kettenverlängerungsreaktion zwischen den Aminogruppen und den Isocyanatgruppen werden Harnstoffstruktureinheiten in den Polyurethanpolyacrylat-Dispersionen gebildet. Anteilig können auch Hydroxyamine mit nur einer Aminogruppe bzw. Monoamine mitverwendet werden, die dann als Kettenabbrecher wirken.

Exemplarisch genannt als Komponenten d) seien Ethylendiamin, 1,3-Propylendiamin, 1,6-Hexamethylendiamin, 1,4-Butandiamin, Hydrazin(hydrat), aminofunktionelle Polyethylenoxide oder Polypropylenoxide, die z.B. unter dem Namen Jeffamin®, (Fa. Huntsman Corp. Europe, Belgien) erhältlich sind, alkoxysilangruppenhaltige Mono- oder Diamine, Diethylentriamin, Monoamine wie z.B. Butylamin oder Diethylamin, Triethylentetramin, Isophorondiamin, Hydroxyamine wie z.B. Diethanolamin, Hydroxyethylethylendiamin und Bishydroxyethylethylendiamin.

Bevorzugt sind lineare aliphatische Diamine wie Ethylendiamin, Hydrazin(hydrat) oder 1,6-Hexamethylendiamin sowie gegebenenfalls aliphatische Triamine wie Diethylentriamin.

Komponente d) wird in solchen Mengen eingesetzt, dass der Kettenverlängerungsgrad 30 bis 200 % beträgt.

Als Kettenverlängerungsgrad definiert ist das Verhältnis der Menge an Equivalenten an Aminogruppen der Komponente d) zur Menge der Equivalenten an Isocyanatgruppen des Prepolymeren A), welches durch Umsetzung der Komponenten a), b), c) und gegebenenfalls e) erhalten wird. Ein Kettenverlängerungsgrad von 100% gemäß dieser Definition wird erhalten, wenn die Menge an Equivalenten an Aminogruppen der Komponente d) exakt der Menge an Equivalenten an Isocyanatgruppen des Prepolymeren A) entspricht.

Der Kettenverlängerungsgrad liegt bevorzugt 100 % bis 200 %, besonders bevorzugt bei 106 % bis 150 %.

Gegebenenfalls mitzuverwendende Komponenten e) sind sonstige monomere, oligomeren und/oder polymeren Substanzen, die gegebenenfalls auch weitere ungesättigte Gruppen aufweisen können. Dies können z.B. niedermolekulare Alkohole wie Butandiol, Hexandiol, Neopentylglykol, Diethylenglykol, Triethylenglykol, Propylenglykol, Dipropylenglykol, Tetraethylenglykol und/oder Trimethylolpropan, ethoxylierte und/oder propoxylierte Diole und/oder Triole z.B. auf Basis von Diethylenglykol oder Trimethylolpropan, Polycarbonatdiole des Molekulargewichts 700 bis 2200 g/Mol, Polyetherdiole des Molekulargewichts 300 bis 2000 g/Mol, Polyesterdiole, ungesättigte Fettsäuren enthaltende Alkydharze, Monoalkohole wie z.B. Benzylalkohol, Stearylalkohol, 2-Ethylhexylalkohol, Oleylalkohol, Butylglykol, Butyldiglykol, Umsetzungsprodukte von Monoepoxiden wie z.B. Cardura® E10 und Monocarbosäuren und/oder Oligoester mit OH-Zahlen von 240 bis 500, bevorzugt 300 bis 500 mg KOH/g Substanz und einem Molekulargewicht Mw von 200 bis 700, bevorzugt 250 bis 390 g/Mol, und/oder ungesättigte Gruppen enthaltende Oligomere und/oder hydroxylfunktionelle und/oder nicht isocyanatreaktive flüssige Polymere wie z.B. Epoxy(meth)acrylate, Ester(meth)acrylate, Polyester(meth)acrylate, Ether(meth)acrylate, Polyether(meth)acrylate und/oder Urethan(meth)acrylate. Über die Hydroxylgruppen ist ein teilweiser bzw. vollständiger Einbau in das Polymer möglich.

Oligoester werden erhalten durch Veresterung von Carbonsäuren wie z.B. Adipinsäure, Isophthalsäure, Phthalsäureanhydrid, Maleinsäureanhydrid, Fumarsäure, Tetrahydrophtalsäure, Hexahydrophthalsäure, Dimerfettsäure, Sojaölfettsäure, Benzoesäure und/oder Glutarsäure mit Alkoholen wie z.B. Neopentylglykol, Hexandiol, Ethylenglykol, Propylenglykol, Butandiol, Diethylenglykol, Dipropylenglykol, 1,4-Cyclohexandimethanol, 1,4-Cyclohexandiol, TCD-Diol, Trimethylolpropan, Glycerin und/oder Pentaerythrit. Bevorzugt ist die Verwendungen von Adipinsäure, Isophthalsäure, Phthalsäureanhydrid, Tetrahydrophthalsäureanhydrid, und/oder Hexahydrophthalsäureanhydrid mit Neopentylglykol, Ethylenglykol, Diethylenglykol, Glycerin und/oder Trimethylolpropan. Besonders bevorzugt ist die Verwendung von Isophthalsäure bzw. Phthalsäureanhydrid, ggf. in Kombination mit Adipinsäure und Neopentylglykol ggf. in Kombination mit Trimethylolpropan.

Es ist auch möglich, verschiedene Komponenten e) mit und ohne Hydroxylgruppen gleichzeitig einzusetzen, dies führt dazu, dass ein Teil der Komponente d) in das Polymer eingebaut wird und ein Teil durch das Polymer dispergiert wird. Auf diese Art und Weise ist es möglich z.B. sogenannte Reaktivverdünner, das heißt bei Raumtemperatur fließfähige bzw. flüssige Substanzen, die keine hydrophilen Gruppen, dafür aber ungesättigte, für eine UV-Härtung geeignet Gruppen aufweisen mit zu dispergieren und so stabile Dispersionen auf Polyisocyanatbasis z.B. mit besonders hohen Anteilen an polymerisierbaren Gruppen oder mit chemisch unterschiedlichem Polymer- bzw. Oligomerrückgrat zu erhalten.

In einer bevorzugten Ausführungsform werden als Komponente e) niedermolekulare Diole wie Butandiol, Hexandiol, Neopentylglykol, Ethylenglykol, Propylenglykol und/oder Polymerdiole wie z.B. Polycarbonatdiole, Polesterdiole oder Epoxyacrylate, Esteracrylate, Polyesteracrylate und/oder Monoalkohole wie z.B. Benzylalkohol und/oder Umsetzungsprodukte aus Monoepoxiden, wie z.B. Cardura® E10, mit ungesättigte Fettsäuren eingesetzt.

In einer weiteren bevorzugten Ausführungsform werden als Komponente e) Oligoester mit OH-Zahlen von 240 bis 500, bevorzugt 300 bis 500 mg KOH/g Substanz und einem Molekulargewicht Mw von 200 bis 700, bevorzugt 250 bis 390 g/Mol, in einer Menge von 0,5 bis 25 Gew-% eingesetzt.

Die erfindungsgemäßen UV-härtbaren Dispersionen auf Polyisocyanatbasis können auch in Mischung mit anderen Dispersionen eingesetzt werden. Dies können Dispersionen sein, die ebenfalls ungesättigte Gruppen enthalten, wie z.B. ungesättigte, polymerisierbare Gruppen enthaltende Dispersionen auf Polyester-, Polyurethan-, Polyepoxid-, Polyether-, Polyamid-, Polysiloxan-, Polycarbonat-, Polymerisat- und/oder Polyacrylatbasis.

Es können auch Dispersionen z.B. auf Basis von Polyestern, Polyurethanen, Polyepoxiden, Polyethern, Polyamiden, Polyvinylestern, Polyvinylethern, Polysiloxanen, Polycarbonaten, Polymerisaten oder Polyacrylaten zugemischt werden, die funktionelle Gruppen, wie z.B. Alkoxysilangruppen, Hydroxygruppen oder Isocyanatgruppen enthalten. So können z.B. dual cure Systeme hergestellt werden, die über zwei verschiedene Mechanismen ausgehärtet werden können.

Beschichtungsmittel, enthaltend die erfindungsgemäßen UV-härtbaren Dispersionen auf Polyisocyanatbasis, sowie Vernetzer auf Basis von Aminoharzen und/oder Polyisocyanaten und/oder blockierten Polyisocyanten sind ebenfalls Gegenstand der vorliegenden Erfindung. Geeignete Aminovernetzerharze sind z. B. solche auf Melamin- oder Harnstoffbasis. Geeignete Polyisocyanate sind z.B. solche wie unter der Beschreibung von a) genannt sind. Grundsätzlich geeignete Hydrophilierungsmittel für die Polyisocyanate, wie z.B auf Polyetherbasis sind in der Beschreibung von c) genannt. Geeignete Blockierungsmittel sind z.B. Methanol, Ethanol, Butanol, Hexanol, Benzylakohol, Acetoxim, Butanonoxim, Caprolactam, Phenol, Diethylmalonat, Dieethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin und/oder tert.-Butylisopropylamin.

Es können auch Dispersionen auf Basis von auf Polyestern, Polyurethanen, Polyepoxiden, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polymerisaten oder Polyacrylaten zugemischt werden, die keine funktionellen Gruppen aufweisen.

Ebenfalls zu Kombination mit den erfindungsgemäßen Dispersionen geeignet sein können sogenannte Reaktivverdünner, niedrigviskose Verbindungen mit ungesättigten Gruppen, wie z.B. Hexandiolbisacrylat, Trimethylolpropantrisacrylat, Trimethlolpropandiacrylat, Pentaerythrittetraacrylat, Dipentaerythrithexaacrylat oder Diepoxidbisacrylate auf Bisphenol A Basis.

Gegenstand der vorliegenden Erfindung sind auch Bindemittelkombinationen, enthaltend die erfindungsgemäßen UV-härtbaren Dispersionen auf Polyisocyanatbasis, sowie ein oder mehrere weitere Dispersionen.

Die erfindungsgemäßen UV-härtbaren Dispersionen auf Polyisocyanatbasis können auch in Mischung mit nicht wasserlöslichen oder wasserdispergierbaren, ungesättigte Gruppen enthaltenden Oligomeren oder Polymeren eingesetzt werden, wobei die nicht wasserlöslichen bzw. wasserdispergierbaren, ungesättigte Gruppen enthaltenden Oligomeren bzw. Polymeren den erfindungsgemäßen UV-härtbaren Dispersionen auf Polyisocyanatbasis vor dem Dispergieren zugesetzt werden, wodurch die erfindungsgemäßen UV-härtbaren Dispersionen auf Polyisocyanatbasis als polymere Emulgatoren für diese Substanzen dienen. Bevorzugt Mischungen sind Bindemittelkombinationen, enthaltend die erfindungsgemäßen UV-härtbaren Dispersionen auf Polyisocyanatbasis, sowie nicht wasserlösliche oder wasserdispergierbare, ungesättigte Gruppen enthaltende Oligomere oder Polymere.

Gegenstand der Erfindung ist auch ein Verfahren zur Herstellung der erfindungsgemäßen UV-härtbaren Dispersionen auf Polyisocyanatbasis, dadurch gekennzeichnet, dass durch Umsetzung der Komponenten b) und c), gegebenenfalls zusammen mit e), in einem oder mehreren Reaktionsschritten, mit einem Überschuss an Komponente a) ein isocyanatfunktionelles Prepolymer A) erhalten wird, wobei das Neutralisationsmittel zur Erzeugung der für die Dispergierung notwendigen ionischen Gruppen vor, während oder nach dieser Prepolymer-Herstellung zugegeben werden kann, gefolgt durch den Dispergierschritt durch Zugabe von Wasser zum Prepolymer A) bzw. Überführen des Prepolymeren A) in eine wässrige Vorlage, gefolgt durch einen Kettenverlängerungsschritt durch Zugabe der Komponente d).

Gegenstand der Erfindung ist auch ein Verfahren zur Herstellung der erfindungsgemäßen UV-härtbaren Dispersionen auf Polyisocyanatbasis, dadurch gekennzeichnet, dass durch Umsetzung der Komponenten a), b), und c) gegebenenfalls zusammen mit e), in einem oder mehreren Reaktionsschritten, mit einem Überschuss an Komponente a) ein isocyanatfunktionelles Prepolymer A) erhalten wird, wobei das Neutralisationsmittel zur Erzeugung der für die Dispergierung notwendigen ionischen Gruppen vor, während oder nach dieser Prepolymer-Herstellung zugegeben werden kann, gefolgt durch einen Kettenverlängerungsschritt durch Zugabe der Komponente d), gefolgt durch den Dispergierschritt durch Zugabe von Wasser zum Prepolymer A) bzw. Überführen des Prepolymeren A) in eine wässrige Vorlage.

Gegenstand der Erfindung ist auch ein Verfahren zur Herstellung der erfindungsgemäßen UV-härtbaren Dispersionen auf Polyisocyanatbasis, dadurch gekennzeichnet, dass durch Umsetzung der Komponenten b) und c), gegebenenfalls zusammen mit e), in einem oder mehreren Reaktionsschritten, mit einem Überschuss an Komponente a) ein isocyanatfunktionelles Prepolymer A) erhalten wird, wobei das Neutralisationsmittel zur Erzeugung der für die Dispergierung notwendigen ionischen Gruppen vor, während oder nach dieser Prepolymer-Herstellung zugegeben werden kann, gefolgt durch den Dispergierschritt durch Zugabe von Wasser zum Prepolymer A) bzw. Überführen des Prepolymeren A) in eine wässrige Vorlage, gefolgt durch einen Kettenverlängerungsschritt durch Zugabe der Komponente d).

Der Kettenverlängerungsgrad ist während des erfindungsgemäßen Verfahrens so einzustellen, dass dieser bei 40 bis 200%, bevorzugt zwischen 100 % und 200 % liegt.

Die erfindungsgemäßen Dispersionen weisen Feststoffgehalte von 25 bis 65 Gew.-%, bevorzugt von 35 bis 60 Gew.-% auf.

Im erfindungsgemäßen Verfahren kann bei der Herstellung des Prepolymeren A) ein organisches Lösemittel und/oder ein Katalysator eingesetzt werden.

Geeignete Katalysatoren zur Herstellung der Prepolymeren A) bzw. der erfindungsgemäßen Dispersionen sind prinzipiell alle, die die Umsetzung von Isocyanatgruppen mit Hydroxylgruppen katalysieren, wie z.B. tertiäre Amine, Zinn-, Zink-, Zirkonium-, Kupfer- und/oder Wismuthverbindungen, bevorzugt Triethylamin, Ethyldiisopropylamin, Dimethylcyclohexylamin, N-Methylmorpholin, 1,4-Diazabicyclo-[2,2,2]-oktan, Zinndioktoat oder Dibutylzinndilaurat. Ebenfalls geeignet sind Salze des Zinks, des Titans, des Molybdän. Geeignete Mengen sind z.B. 0,002 bis 1 Gew.-%, bevorzugt 0,01 bis 0,1 Gew. -%. Die Umsetzung kann auch ohne Verwendung eines Katalysators durchgeführt werden.

Die Herstellung der erfindungsgemäßen Dispersionen erfolgt bei 20 bis 150°C, bevorzugt bei 25 bis 75°C.

Die Komponente d) kann im erfindungsgemäßen Verfahren mit Wasser und/oder organischen Lösemitteln verdünnt vorliegen. Das optional eingesetzte Lösemittel kann anschließend destillativ abgetrennt werden. Eine Herstellung ohne Verwendung von Lösemitteln ist möglich, bevorzugt erfolgt jedoch eine Herstellung in organischen Lösemitteln.

Die erfindungsgemäßen UV-härtbaren Dispersionen auf Polyisocyanatbasis enthalten weniger als 5 Gew.-%, bevorzugt weniger als 1 Gew.-% und besonders bevorzugt weniger als 0,5 Gew.-% an organischen Lösemitteln.

Bevorzugt ist die Herstellung in 3 bis 50 Gew. -%, besonders bevorzugt in 5 bis 25 Gew. -% Aceton mit anschließender destillativer Entfernung des Lösemittels nach Herstellung der Dispersion bzw. während des Dispergierschrittes.

Geeignete Lösemittel sind prinzipiell alle Lösemittel bzw. Lösemittelgemische, die nicht mit den Reaktionskomponenten reagieren, wie z.B. N-Methylpyrrolidon, N-Ethylpyrrolidon, Butylacetat, Ethylacetat, Methoxypropylacetat, Diethylenglykoldimethylether, Dioxan, Dimethylformamid, Xylol, Toluol, Solvent Naphta, Cyclohexanon, Methylisobutylketon, Diethylketon, Methylethylketon, Aceton. Die Lösemittel können anschließend ganz oder teilweise durch Destillation entfernt werden. Es ist auch möglich nach Herstellung der erfindungsgemäßen Dispersion weitere Lösemittel, z.B. hydroxfunktionelle Lösemittel, wie z.B. Butyldiglykol, Methoxypropanol oder Butylglykol zuzusetzen.

Die genannten Säuren werden durch Umsetzung mit Neutralisationsmitteln, wie z.B. Triethylamin, Ethyldiisopropylamin, Dimethylcyclohexylamin, Dimethylethanolamin, Ammoniak, N-Methylmorpholin, NaOH, LiOH und/oder KOH in die entsprechenden Salze überführt. Bei Neutralisationsmitteln die nicht mit Isocyanaten reagieren, kann dies zu jedem beliebigen Zeitpunkt der Herstellung bis einschließlich des Dispergierschrittes erfolgen. Der Neutralisationsgrad, d.h. die Anzahl an Equivalenten an Neutralisationsmittel bezogen auf die Anzahl an Equivalenten an potentiell ionischen Gruppen der Komponente c1) kann zwischen 30 und 150 %, bevorzugt zwischen 50 und 110 % liegen.

Das Verfahren zur Herstellung der erfindungsgemäßen UV-härtbaren Dispersionen auf Polyisocyanatbasis wird bevorzugt so geführt, dass die Kennzahl des Prepolymeren A) zwischen 0,95:1 bis 1,39:1, bevorzugt zwischen 1,005:1 bis 1,15:1 und besonders bevorzugt zwischen 1,005:1 bis 1,065:1 liegt.

Die Kennzahl des Prepolymeren A) beschreibt das Verhältnis der Equivalente der Isocyanatgruppen der Komponente a) zur Summe der Equivalente der isocyanatreaktiven Hydroxy-und/oder Aminogruppen der Komponenten b), c) und gegebenenfalls e).

Gegenstand der Erfindung ist auch die Verwendung der erfindungsgemäßen UV-härtbaren Dispersionen auf Polyisocyanatbasis zur Herstellung von Lacken, z.B. Klarlacken oder pigmentierten Lacken oder Beschichtungen oder Klebstoffe. Sie können dabei als alleiniges Bindemittel, aber auch in Kombination mit anderen Bindemitteln, die bevorzugt aber nicht ausschließlich in Dispersionsform vorliegen, eingesetzt werden.

Lacke, Beschichtungssysteme und Klebstoffe auf Basis der erfindungsgemäßen Dispersionen können vielfältige Additive und Zusatzstoffe enthalten, wie z.B. Stabilisatoren, Initiatoren, Fotoinitiatoren, Antioxidantien, Verlaufsmittel, Peroxide, Hydroperoxide, Entschäumer, Sickative, Benetzungsmittel, Beschleuniger und/oder Lichtschutzmittel.

Als Fotoinitiatoren sind die üblicherweise eingesetzten Verbindungen geeignet, wie z.B. Benzoinether, Benzilketale, Hydroxyalkylphenone, Benzophenone, Alkylbenzophenone, Halogenmethylierte Benzophenone, Michlers Keton, Halogenierte Benzophenone, Antrachinon und Antrachinonderivate oder Oximester.

Geeignete Sikkative sind z.B. Kobalt-, Blei-, Zink-, Kupfer-, Mangan- oder Wismutsalze von Säuren wie Leinölfettsäure, Tallölfettsäure, Sojaölfettsäure, Abietinsäure, Naphtensäure oder Isooktansäure.

Als (Hydro)peroxide seinen beispielhaft genannt: Dicumylperoxid, Di-tert.-Butylperoxid, Benzoylperoxid, Cyclohexanonperoxid, Methylethylketonperoxid, Bis-(4-tert.-butyl-cyclohexyl)-peroxydicarbonat, tert.-Butylhydroperoxid, 2.5-Dimethylhexan-2,5-hydroperoxid oder Wasserstoffperoxid.

Bevorzugt ist die Beschichtung oder Lackierung von holzartigen Substraten, ausgewählt aus der Gruppe Holz, Parkett, Möbel, Türen, Tür- und Fensterrahmen oder Holzwerkstoffe. Ebenfalls bevorzugt ist die Beschichtung oder Lackierung von Kunststoff-Substraten. Es können auch metallische oder mineralische Substrate, Kunststoffe, Papier, Pappe, Kork, Leder, Kunstleder, Textilien, keramische oder auch andere Materialien beschichtet werden.

Der Auftrag der Beschichtungsmittel kann auf bekannte Weise durch Spritzen, Rakeln, Walzen, Streichen, Tauchen oder Gießen erfolgen. Nach dem Verdunsten des Wassers und der organischen Lösemittel kann die Vernetzung der Überzüge entweder mittels energiereicher Strahlung wie UV-Licht, Elektronen- oder Gammastrahlen oder durch Härtung mit Metallsalzen von Sikkativsäuren und/oder (Hydro)peroxiden erfolgen.

Beschichtungsmitttel, enthaltend die erfindungsgemäßen UV-härtbaren Dispersionen auf Polyisocyanatbasis, sowie Vernetzer auf Basis von Aminoharzen und/oder Polyisocyanaten und/oder blockierten Polyisocyanten sind ebenfalls Gegen-stand der vorliegenden Erfindung. Geeignete Aminovernetzerharze sind z. B. solche auf Melamin- oder Harnstoffbasis.

### Beispiele

### Beispiel 1 (Vergleich)

468 g Desmodur N 3300® (Trimer mit Isocyanuratstruktureinheiten auf Basis von Hexamethylendiisocyanat, Bayer MaterialScience AG, Deutschland), 34,8 g Dimethylolpropionsäure, 0,4 g Desmorapid Z® (Zinn-Katalysator, Bayer MaterialScience AG, Deutschland), und 0,4 g 2,6-Di-tert-butyl-4-methylphenol werden in 300 g Aceton gelöst und homogenisiert. Bei 55°C werden 204,2 g Hydroxyethylacrylat so zudosiert, dass die Temperatur nicht über 65°C steigt. Nach Erreichen des theoretischen NCO-Wertes wird eine Lösung von 5,86 g Ethylendiamin (Kettenverlängerungsgrad 117 %) in 32 g Aceton zugegeben und 30 Minuten gerührt. Nach Zugabe von 19 g Triethylamin wird 980 g destilliertes Wasser zum Dispergieren zugegeben und das Aceton im leichten Vakuum abdestilliert. Es wird eine Dispersion auf Polyisocyanatbasis 1) mit einem Feststoffgehalt von 37%, einem pH-Wert von 7,9 und einer mittleren Teilchengröße von 97 nm erhalten.

Die Dispersionen auf Polyisocyanatbasis 1) bis 6) werden mit 1% Photoinitiator Irgacure® 500 (Photoinitiatorgemisch aus Benzophenon und 1-Hydroxycyclohexylphenylketon, Ciba AG, Schweiz) vermischt und auf Buchebretter für die Prüfung der Beständigkeitseigenschaften bzw. auf Sapelibretter für die Prüfung der filmoptischen Eigenschaften in einer Nassfilmstärke von 2x 150 µm Nassfilmstärke mit einem Kastenrakel appliziert. Nach jeder Applikation wird 10 Minuten bei 50°C getrocknet. Die UV Härtung erfolgt mit einer HG Lampe (80 W/cm) bei einer Bandgeschwindigkeit von 5 m/min. Zum Test der Reaktivität wird die nach der Aushärtung erzielte Härte in Pendelsekunden gemessen, der erste Messwert wird bei einer Bandgeschwindigkeit von 5 m/Minute, der zweite Messwert bei einer Bandgeschwindigkeit von 10 m/Minute und der dritte Messwert bei einer Bandgeschwindigkeit von 15 m/Minute ermittelt. Bleibt die Pendelhärte auch bei höchster Bandgeschwindigkeit bei Werten deutlich über 100 Pendelsekunden so besitzt die Beschichtung eine ausgezeichnete Reaktivität.

Nach der UV-Härtung werden die Bretter für 16 Stunden bei Raumtemperatur gelagert und anschließend den Prüfungen unterzogen.

**Tabelle 1: Daten zur anwendungstechnischen Prüfung**

| ***Anwendungstechnische Prüfung*** | **Beispiel 1** |
|---|---|
| Filmtransparenz * | 5 |
| Anfeuerung ** | 4+ |

| *Lagerstabilität:* | |
|---|---|
| 50°C/24 Stunden | ok |
| 40°C/28 Tage | ok |
| Wasserfestigkeit (16 Stunden Belastung) *** | 5 |
| Kaffeebeständigkeit (16 Stunden Belastung) *** | 5 |
| Ethanol/Wasser (1:1)-Beständigkeit (16 Stunden Belastung) *** | 5 |
| Rotweinbeständigkeit (16 Stunden Belastung) *** | 5 |
| Jodbeständigkeit (16 Stunden Belastung) *** | 3 |
| Ethanolbeständigkeit (16 Stunden Belastung). 1. Wert direkt nach Belastung; 2. Wert nach 3 Tagen Erholung des Lackfilmes) *** | 4/5 |
| Reaktivität (Pendelhärte in Sekunden) | 174 / 154 / 146 |
| Haftung **** | 5 |
| Weisanlaufen nach Verkratzung ***** | 5 |

| | |
|---|---|
| **Bewertungsstufen:** 0 bis 5 5 = exzellent; 4 = sehr gut; 3 = gut; 2 = ausreichend; 1 = schwach, 0 = sehr schlecht Die Pendelhärte bzw. Pendeldämpfung wird in Pendelsekunden nach König gemessen (DIN 53157). * Die Filmtransparenz wird durch Aufziehen eines Filmes auf einer Glasplatte und anschließender physikalischer Trocknung visuell beurteilt: Note 5: klar, keine Trübung und Schleierbildung erkennbar Note 4: bei einem Betrachtungswinkel von ca. 10 - 20° ist eine leichte Schleierbildung erkennbar Note 3: bei einem Betrachtungswinkel von ca. 45 - 80° ist eine leichte Trübung erkennbar Note 2: deutliche Trübung Note 1: matte Oberfläche, bzw. griesige Oberfläche ** Die Anfeuerung des Holzuntergrundes wird auf dem Substrat Sapeli durch optische Inaugenscheinnahme durch einen geschulten und erfahrenen Lacktechniker beurteilt. *** Die Beständigkeitseigenschaften werden nach 16 Stunden Belastung durch optische Inaugenscheinnahme beurteilt. Sind keinerlei Veränderungen erkennbar ist das Ergebnis exzellent (=Note 5) **** Die Haftung wird durch Gitterschnitt-Test (DIN 53151) ermittelt. GT 0 wird als exzellente Haftung beurteilt (= Note 5) ***** Das Weisanlaufen nach Verkratzung wird durch Verkratzen mittels einer Münze geprüft. Ist an der Verkratzungsstelle keinerlei Weisanlaufen erkennbar, dann wird dieses Ergebnis als exzellent beurteilt (Note 5). | |

Die Dispersion 1) zeigt insgesamt ein exzellentes Eigenschaftsniveau, insbesondere sehr gute Beständigkeitseigenschaften auch bei Langzeitbelastungen und auch gute Beständigkeitseigenschaften gegen extrem färbende Flüssigkeiten, wie z.B. Jod, eine außerordentlich hohe Reaktivität, Beschichtungen mit sehr guter Transparenz und eine sehr gute Anfeuerung des Holzuntergrundes.

### Beispiel 2

482 g Desmodur N 3300® (Trimer mit Isocyanuratstruktureinheiten auf Basis von Hexamethylendiisocyanat, Bayer MaterialScience AG, Deutschland), 38,6 g Methoxypolyethylenglykol, MG 750 (Carbowax® MPEG 750, DOW Chemical Company, USA), 19,9 g Dimethylolpropionsäure, 0,4 g Desmorapid Z® (Zinn-Katalysator, Bayer MaterialScience AG, Deutschland) und 0,8 g 2,6-Di-tert-butyl-4-methylphenol werden in 130 g Aceton gelöst und homogenisiert. Bei 55°C werden 232 g Hydroxyethylacrylat so zudosiert, dass die Temperatur nicht über 65°C steigt. Nach Erreichen des theoretischen NCO-Wertes werden 15 g Triethylamin zugegeben und die Prepolymerlösung in 990 g destilliertem Wasser dispergiert. Anschließend wird eine Lösung von 4,2 g Ethylendiamin (Kettenverlängerungsgrad 117%) in 38 g Wasser zugegeben und gerührt bis keine Isocyanatgruppen mehr nachweisbar sind. Das Aceton wird im leichten Vakuum abdestilliert. Es wird eine Dispersion auf Polyisocyanatbasis 2) mit einem Feststoffgehalt von 42%, einem pH-Wert von 8,2 und einer mittleren Teilchengröße von 78 nm erhalten.

### Beispiel 3

468 g Desmodur N 3300® (Trimer mit Isocyanuratstruktureinheiten auf Basis von Hexamethylendiisocyanat, Bayer MaterialScience AG, Deutschland), 37,5 g Methoxypolyethylenglykol, MG 750 (MPEG 750, DOW Chemical Company, USA), 19,3 g Dimethylolpropionsäure, 0,36 g Desmorapid Z® (Zinn-Katalysator, Bayer MaterialScience AG, Deutschland) und 0,76 g 2,6-Di-tert-butyl-4-methylphenol werden in 130 g Aceton gelöst und homogenisiert. Bei 55°C werden 252,2 g Hydroxypropylacrylat so zudosiert, dass die Temperatur nicht über 70°C steigt. Nach Erreichen des theoretischen NCO-Wertes werden 12,4 g Triethylamin zugegeben und die Prepolymerlösung in 732 g destilliertem Wasser dispergiert. Anschließend wird eine Lösung von 4,2 g Ethylendiamin (Kettenverlängerungsgrad 117%) in 38 g Wasser zugegeben und gerührt bis keine Isocyanatgruppen mehr nachweisbar sind. Das Aceton wird im leichten Vakuum abdestilliert. Es wird eine Dispersion auf Polyisocyanatbasis 3) mit einem Feststoffgehalt von 40,5 %, einem pH-Wert von 8,2 und einer mittleren Teilchengröße von 92 nm erhalten.

### Beispiel 4

602,6 g Desmodur N 3300® (Trimer mit Isocyanuratstruktureinheiten auf Basis von Hexamethylendiisocyanat, Bayer MaterialScience AG, Deutschland), 67,6 g Methoxypolyethylenglykol, MG 750 (MPEG 750, DOW Chemical Company. USA), 12,4 g Dimethylolpropionsäure, 8,3 g Butandiol, 0,5 g Desmorapid Z® (Zinn-Katalysator, Bayer MaterialScience AG, Deutschland) und 1,0 g 2,6-Di-tert-butyl-4-methylphenol werden in 168 g Aceton gelöst und homogenisiert. Bei 55°C werden 287 g Hydroxyethylacrylat so zudosiert, dass die Temperatur nicht über 65°C steigt. Nach Erreichen des theoretischen NCO-Wertes werden 6,6 g Triethylamin zugegeben und die Prepolymerlösung in 902 g destilliertem Wasser dispergiert. Anschließend wird eine Lösung von 5,3 g Ethylendiamin (Kettenverlängerungsgrad 117 %) in 47 g Wasser zugegeben und gerührt bis keine Isocyanatgruppen mehr nachweisbar sind. Das Aceton wird im leichten Vakuum abdestilliert. Es wird eine Dispersion auf Polyisocyanatbasis 4) mit einem Feststoffgehalt von 47,2 %, einem pH-Wert von 8,0 und einer mittleren Teilchengröße von 112 nm erhalten.

### Beispiel 5

662,8 g Desmodur N 3300® (Trimer mit Isocyanuratstruktureinheiten auf Basis von Hexamethylendiisocyanat, Bayer MaterialScience AG, Deutschlaund), 23,4 g Methoxypolyethylenglykol, MG 750 (MPEG 750, DOW Chemical Company, USA), 28,1 g Dimethylolpropionsäure, 5,4 g Butandiol, 0,6 g Desmorapid Z® (Zinn-Katalysator, Bayer MaterialScience AG, Deutschland) und 1,1 g 2,6-Di-tert-butyl-4-methylphenol werden in 181 g Aceton gelöst und homogenisiert. Bei 55°C werden 308,9 g Hydroxyethylacrylat so zudosiert, dass die Temperatur nicht über 68°C steigt. Nach Erreichen des theoretischen NCO-Wertes werden 12,7 g Triethylamin zugegeben und die Prepolymerlösung in 759 g destilliertem Wasser dispergiert. Anschließend wird eine Lösung von 5,8 g Ethylendiamin (Kettenverlängerungsgrad 117%) in 52 g Wasser zugegeben und gerührt bis keine Isocyanatgruppen mehr nachweisbar sind. Das Aceton wird im leichten Vakuum abdestilliert. Es wird eine Dispersion auf Polyisocyanatbasis 5) mit einem Feststoffgehalt von 56,4 %, einem pH-Wert von 7,7 und einer mittleren Teilchengröße von 221 nm erhalten.

### Beispiel 6

723,1 g Desmodur N 3300® (Trimer mit Isocyanuratstruktureinheiten auf Basis von Hexamethylendiisocyanat, Bayer MaterialScience AG, Deutschland), 45,9 g Methoxypolyethylenglykol, MG 750 (MPEG 750, DOW Chemical Company, USA), 22,2 g Dimethylolpropionsäure, 10,2 g Butandiol, 0,6 g Desmorapid Z® (Zinn-Katalysator, Bayer MaterialScience AG, Deutschland) und 1,2 g 2,6-Di-tert-butyl-4-methylphenol werden in 201 g Aceton gelöst und homogenisiert. Bei 55°C werden 336,9 g Hydroxyethylacrylat so zudosiert, dass die Temperatur nicht über 68°C steigt. Nach Erreichen des theoretischen NCO-Wertes werden 10,9 g Triethylamin zugegeben und die Prepolymerlösung in 678 g destilliertem Wasser dispergiert. Anschließend wird eine Lösung von 5,9 g Ethylendiamin (Kettenverlängerungsgrad 110%) in 53,5 g Wasser zugegeben und gerührt bis keine Isocyanatgruppen mehr nachweisbar sind. Das Aceton wird im leichten Vakuum abdestilliert. Es wird eine Dispersion auf Polyisocyanatbasis 6) mit einem Feststoffgehalt von 57,2 %, einem pH-Wert von 7,9 und einer mittleren Teilchengröße von 191 nm erhalten.

**Tabelle 2**

| **Anwendungstechnische Prüfung** | | | | | |
|---|---|---|---|---|---|
| | Bsp 2 | Bsp 3 | Bsp 4 | Bsp 5 | Bsp 6 |
| Filmtransparenz | 5 | 5 | 5 | 5 | 5 |
| Fülle ****** | 4 | 4 | 4 | 15 | 5 |

| Lagerstabilität | | | | | |
|---|---|---|---|---|---|
| - 50°C/24 Stunden | ok | ok | ok | ok | ok |
| - 40°C/28 Tage | ok | ok | ok | ok | ok |
| Wasserfestigkeit (16 Stunden Belastung) | 5 | 5 | 5 | 5 | 5 |
| Kratzempfindlichkeit nach Wasserbelastung | 4 | 4 | 5 | 5 | 5 |
| Kaffeebeständigkeit (16 Stunden Belastung) | 5 | 5 | 5 | 5 | 5 |
| Ethanol/Wasser (1:1) - Beständigkeit (6 Stunden Belastung, 3 Tage Erholung) | 5 | 5 | 5 | 5 | 5 |
| Ethanolbeständigkeit (xx Belastung; 3 Tage Erholung) | 4 | 5 | 5 | 5 | 5 |
| Rotweinbeständigkeit | 5 | 5 | 5 | 5 | 5 |
| Reemulgierbarkeit ******* | nicht getestet | 2+ | 1+ | 2+ | 2+ |
| Reaktivität (Pendelhärte) | 174 154 / 146 sec / | 147 / 141 / 136 sec | 139 / 137 / 122 sec | 161 / 155 / 147 sec | 154 / 150 / 144 sec |
| Anfeuerung | 4+ | 4+ | 4+ | 5+ | 5+ |
| Haftung | 5 | 5 | 4 | 5 | 5 |
| Weisanlaufen nach Verkratzung | 5 | 5 | 5 | 5 | 5 |

| | | | | | |
|---|---|---|---|---|---|
| ******:Mittels einer visuellen Beurteilung wird der Fülleaufbau der Beschichtung auf einer Holzfläche beurteilt. Die lackierte Oberfläche wird hinsichtlich des Fülleaufbaues visuell beurteilt und einer relativen Notenskala 1 - 5 zugeordnet Note 5: sehr hohe Fülle (geschlossenes Porenbild) Note 4: sehr hohe Fülle (im Porenbereich noch leichte Vertiefungen erkennbar) Note 3: mittlere Fülle (Poren sind deutlich erkennbar) Note 2: geringe Fülle, wobei der Lackfilm bereits teilweise in den Untergrund penetriert ist Note 1: Lackierfilm ist völlig im Untergrund penetriert ******* Reemulgierbarkeit: Zur Reinigung von Applikationsaggregaten sollte eine angetrocknete Dispersion mit Wasser so reemulgiert werden können, dass wieder eine feinteilige Dispersion entsteht. | | | | | |

Dazu wird die Dispersion mittels Kastenrakels auf die Glasplatte aufgezogen. Anschließend wird der Glasaufzug physikalisch getrocknet. Die Glasplatte wird auf einen schwarzen Untergrund gelegt und auf die Oberfläche ca. 3 Tropfen Wasser gegeben. Es wird die Zeit bestimmt, ab die sich die belastete Fläche weißlich verändert. Nach einer Belastungszeit von 3 min wird der Wassertropfen mittels Finger (Fingerprobe) verrührt und beurteilt, ob der erweichte Film cremig / schmierig oder hautähnlich wird.

Der Zeitpunkt der farblichen Veränderung wird einer Notenskala von 1 bis 5 und die Fingerprobe einer Kennzeichnung (+ und -) zugeordnet.

Somit besteht die Benotung aus einem Vorzeichen und einer Note:
(+) cremig/schmierig (Positiv)/ (-) hautähnlich (Negativ)
Note 1: 0 - 20 s
Note 2: 21 - 50 s
Note 3:51 - 80 s
Note 4: 81 - 180 s
Note 5: > 180 s

Die UV-härtbaren Dispersionen auf Polyisocyanatbasis gemäß Beispiel 2 bis 6 zeigen ebenfalls ein ausgezeichnetes Eigenschaftsniveau bezüglich Filmoptik, Anfeuerung des Holzuntergrundes, Fülle, Beständigkeitseigenschaften und Filmmechanik. Die Reaktivität und Pendelhärte ist ebenfalls sehr hoch.

Die Verarbeitbarkeit ist insgesamt ausgezeichnet. Die Reemulgierbarkeit und damit die Reinigungsfähigkeit von Applikationsanlagen bzw. -werkzeugen von angetrockneten Polymerfilmen entspricht den Anforderungen vollständig.

### Beispiel 7

602,6 g Desmodur N 3300® (Trimer mit Isocyanuratstruktureinheiten auf Basis von Hexamethylendiisocyanat, Bayer MaterialScience AG, Deutschland), 29 g Methoxypolyethylenglykol, MG 750 (MPEG 750, DOW Chemical Company, USA), 38 g Dimethylolpropionsäure, 136,5 g eines hydroxyfunktionellen Umsetzungsproduktes von 1 Mol Cardura E10® (Monoepoxid, Hexion Speciality Chemicals, Niederlande) und 1 Mol Sojaölfettsäure, wobei die Umsetzung bei 130°C in Gegenwart von 100 ppm Tetrabutylammoniumchlorid durchgeführt wurde, 0,5 g Desmorapid Z® (Zinn-Katalysator, Bayer MaterialScience AG, Deutschland) und 1g 2,6-Di-tert-butyl-4-methylphenol werden in 150 g Aceton gelöst und homogenisiert. Bei 55 °C werden 247,9 g Hydroxyethylacrylat so zudosiert, dass die Temperatur nicht über 68 °C steigt. Nach Erreichen des theoretischen NCO-Wertes werden 18,6 g Triethylamin zugegeben und die Prepolymerlösung in ein Gemisch von 3 g Ethylendiamin (Kettenverlängerungsgrad 114 %) und 770 g destilliertem Wasser dispergiert und dann das Aceton im leichten Vakuum abdestilliert. Es wird eine Dispersion auf Polyisocyanatbasis 7) mit einem Feststoffgehalt von 40 %, einem pH-Wert von 7,8 und einer mittleren Teilchengröße von 150 nm erhalten.

Die anwendungstechnische Prüfung nach dem oben für die Beispiele 1) bis 6) beschriebenen Vorgehen ergibt für die Dispersion 7) die höchste Bewertungsstufe 5 für Filmhomogenität, Filmtransparenz, Weisanlaufen nach Verkratzung und die Beständigkeiten gegen Wasser, Kaffee, Ethanol, Rotwein und eine 1:1 Wasser/Ethanolmischung. Anfeuerung, Fülle und Haftung werden mit der Bewertungsstufe 4 beurteilt. Die Reemulgierbarkeit wird mit 2+ bewertet und ist somit ebenfalls sehr gut.

### Beispiel 8

164,4 g eines Oligoesters (Veresterungsprodukt aus 6574 g Isophthalsäure, 1327 g Trimethylolpropan und 7207 g Neopentylglykol, Säurezahl < 2, OH-Zahl =366 mg KOH/G Substanz, Molekulargewicht Mw = 346 g/Mol), 8,1 g Methoxypolyethylenglykol, MG 750, (MPEG 750, DOW Chemical Company, USA), 36,4 g Dimethylolpropionsäure, 189,7 g Hydroxyethylacrylat, 0,1 g Desmorapid SO® (Zinn-Katalysator, Bayer MaterialScience AG, Deutschland) und 0,4 g 2,6-Di-tert-butyl-4-methylphenol werden in 234 g Aceton bei 40°C gelöst, dann werden 267,2 g Diisocyanatodicyclohexylmethan (Desmodur W®, Bayer MaterialScience AG, Deutschland) und dann 269,2 g Desmodur N 3300® (Trimer mit Isocyanuratstruktureinheiten auf Basis von Hexamethylendiisocyanat, Bayer MaterialScience AG, Deutschland) so zugegeben, dass die Reaktionstemperatur durch die Exothermie nicht über 65°C steigt. Es wird bei 60°C gerührt bis der theoretische NCO-Wert von 0,56% erreicht ist. Dann werden 17,4 g Triethylamin zugegeben und die Prepolymerlösung durch Zugabe von 727 g destilliertem Wasser dispergiert. Anschließend wird eine Lösung von 5,2 g Ethylendiamin (Kettenverlängerungsgrad 111%) in 20 g Wasser zugegeben und dann das Aceton im leichten Vakuum abdestilliert. Es wird eine Dispersion auf Polyisocyanatbasis 8) mit einem Feststoffgehalt von 48 %, einem pH-Wert von 7,8 und einer mittleren Teilchengröße von 220 nm erhalten.

Die anwendungstechnische Prüfung nach dem oben für die Beispiele 1) bis 6) beschriebenen Vorgehen ergibt für die Dispersion 8) die höchste Bewertungsstufe 5 für Filmhomogenität, Filmtransparenz, Haftung und die Beständigkeiten gegen Wasser, Kaffee, Ethanol, Rotwein und eine 1:1 Wasser/Ethanolmischung. Die Anfeuerung ist gut. Der Film trocknet physikalisch mit einer Pendelhärte von 18 sec. Die Reaktivität (gemessen über die Pendelhärte in Abhängigkeit von der Belichtungsdauer) ist mit 178/171/165 sec ebenfalls sehr hoch.

Die erfindungsgemäßen Dispersionen erfüllen somit alle gestellten Anforderungen.

## Patentansprüche

1. Wässrige UV-härtbare Dispersionen auf Polyisocyanatbasis als Bindemittel für die Herstellung von Lacken, enthaltend als Aufbaukomponenten
a) 35 bis 75 Gew. -% einer Polyisocyanatkomponente a) mit einer durchschnittlichen Funktionalität von mindestens 2,2, bestehend zu mindestens 40 Gew. -% aus flüssigen oligomeren Polyisocyanaten auf Basis von Hexamethylendiisocyanat mit Isocyanurat-, Biuret-, Uretdion-, Carbodiimid- und/oder Iminooxadiazindion- Struktureinheiten und zu höchstens 60 Gew. -% aus Isophorondiisocyanat, H6-2,4- bzw. 2,6-Toluylidendiisocyanat, 1,6-Hexamethylendiisocyanat, 4,4'-Diisocyanato-dicyclohexylmethan und/oder 2,4'-Diisocyanato-dicyclohexylmethan und/oder 2,2'-Diisocyanato-dicyclohexyl-methan und/oder 2,4- bzw. 2,6- Toluylidendiisocyanat bzw. deren Umsetzungsprodukte mit Trimethylolpropan, Butandiol, Ethylenglykol, Diethylenglykol, Propylenglykol oder Neopentylglykol,
b) 10 bis 50 Gew. -% ein oder mehrere monohydroxyfunktionelle, (Meth)acryloylgruppen aufweisende Verbindungen,
c) 1,5 bis 19 Gew. -% einer Komponente c), wobei die Komponente c) mindestens eine Komponente c1), die auf Grund eingebauter (potentiell) ionischer Gruppen hydrophilierend wirkt und mindestens eine weitere isocyanatreaktive Gruppe aufweist und mindestens eine Komponente c2), die nichtionisch hydrophilierend wirkende Gruppen enthält und mindestens eine weitere isocyanatreaktive Gruppe aufweist, enthält,
d) 0,1 bis 10 Gew. -% ein oder mehrere di- und/oder polyfunktionellen Amine oder Hydroxyamine als Kettenverlängerer, und
e) gegebenenfalls sonstige monomere, oligomere und/oder polymere Substanzen, die gegebenenfalls auch weitere ungesättigte Gruppen aufweisen können, ausgewählt aus niedermolekularen Diolen und/oder Polymerdiolen oder Epoxyacrylaten, Esteracrylaten, Polyesteracrylaten und/oder Umsetzungsprodukten aus Monoepoxiden mit ungesättigte Fettsäuren,
wobei sich die Prozentangaben zu a) bis d) zu 100% ergänzen und die das Verhältnis der Äquivalente der Isocyanatgruppen der Komponente a) zur Summe der Äquivalente der isocyanatreaktiven Hydroxy- und/oder Aminogruppen der Komponenten b), c) und gegebenenfalls e) zwischen 0,95:1 und 1,39:1 liegt, und wobei die UV-härtbaren Dispersionen auf Polyisocyanatbasis durch Einbau von Komponente c) Säurezahlen von 0 bis 26 mg KOH/g Substanz, bezogen auf Feststoffgehalt, aufweisen, der Urethangruppengehalt im Bereich von 8 bis 30 Gew. -%, bezogen auf Feststoffgehalt, liegt, und die UV-härtbaren Dispersionen auf Polyisoscyanatbasis weniger als 5 Gew.-% an organischen Lösemitteln enthalten.

2. Wässrige UV-härtbare Dispersionen auf Polyisocyanatbasis gemäß Anspruch 1, **dadurch gekennzeichnet, dass** die Polyisocyanatkomponente a) zu mindestens 70 Gew.- % aus oligomeren Polyisocyanaten auf Basis von Hexamethylendiisocyanat mit Biuret-, Iminooxadiazindion- und/oder Isocyanuratstruktureinheiten und zu höchsten 30 Gew.-% aus Isophorondiisocyanat, 4,4'-Diisocyanato-dicyclohexylmethan und/oder 2,4'-Diisocyanato-dicyclohexyl-methan und/oder 2,2'-Diisocyanato-dicyclohexyl-methan und/oder 2,4- bzw. 2,6-Toluylidendiisocyanat besteht.

3. Wässrige UV-härtbare Dispersionen auf Polyisocyanatbasis gemäß Anspruch 1 oder 2, **dadurch gekennzeichnet, dass** diese 0,5 bis 40 Gew.%, an Komponente e) enthalten.

4. Wässrige UV-härtbare Dispersionen auf Polyisocyanatbasis gemäß Anspruch 1 oder 2, **dadurch gekennzeichnet, dass** diese als Komponente e) Oligoester mit OH-Zahlen von 240 bis 500 mg KOH/g Substanz, in einer Menge von 0,5 bis 25 Gew.-% enthalten.

5. Wässrige UV-härtbare Dispersionen auf Polyisocyanatbasis gemäß Anspruch 1, **dadurch gekennzeichnet, dass** 2 bis 8 Gew. -% einer Mischung aus Salzen von 2-(2-Amino-ethylamino-)-ethansulfonsäure und/oder des Additionsproduktes von Diaminen mit Acrylsäure und/oder Dimethylolpropionsäure als Komponente c1) und mindestens einem monohydroxyfunktionellen Polyalkylenoxidpolyether des Molekulargewichts von 500 bis 1100 g/Mol als c2) eingesetzt werden.

6. Wässrige UV-härtbare Dispersionen auf Polyisocyanatbasis gemäß Anspruch 1, **dadurch gekennzeichnet, dass** als Komponente d) lineare aliphatische Diamine, gegebenenfalls in Kombination mit Triaminen eingesetzt werden.

7. Wässrige UV-härtbare Dispersionen auf Polyisocyanatbasis gemäß Anspruch 1, **dadurch gekennzeichnet, dass** die Komponente d) in solchen Mengen eingesetzt wird, dass der Kettenverlängerungsgrad zwischen 100 % und 200 % liegt.

8. Verfahren zur Herstellung der UV-härtbaren Dispersionen auf Polyisocyanatbasis gemäß Anspruch 1, **dadurch gekennzeichnet, dass** durch Umsetzung der Komponenten a), b), und c) gegebenenfalls zusammen mit e), in einem oder mehreren Reaktionsschritten, mit einem Überschuss an Komponente a) ein isocyanatfunktionelles Prepolymer A) erhalten wird, wobei das Neutralisationsmittel zur Erzeugung der für die Dispergierung notwendigen ionischen Gruppen vor, während oder nach dieser Prepolymer-Herstellung zugegeben werden kann, gefolgt durch einen Kettenverlängerungsschritt durch Zugabe der Komponente d), gefolgt durch den Dispergierschritt durch Zugabe von Wasser zum Prepolymer A) bzw. Überführen des Prepolymeren A) in eine wässrige Vorlage.

9. Verfahren zur Herstellung der UV-härtbaren Dispersionen auf Polyisocyanatbasis gemäß Anspruch 1, **dadurch gekennzeichnet, dass** durch Umsetzung der Komponenten b) und c), gegebenenfalls zusammen mit e), in einem oder mehreren Reaktionsschritten, mit einem Überschuss an Komponente a) ein isocyanatfunktionelles Prepolymer A) erhalten wird, wobei das Neutralisationsmittel zur Erzeugung der für die Dispergierung notwendigen ionischen Gruppen vor, während oder nach dieser Prepolymer-Herstellung zugegeben werden kann, gefolgt durch den Dispergierschritt durch Zugabe von Wasser zum Prepolymer A) bzw. Überführen des Prepolymeren A) in eine wässrige Vorlage, gefolgt durch einen Kettenverlängerungsschritt durch Zugabe der Komponente d).

10. Verfahren zur Herstellung der UV-härtbaren Dispersionen auf Polyisocyanatbasis gemäß Anspruch 8 oder 9, **dadurch gekennzeichnet, dass** der Kettenverlängerungsgrad 100 bis 200 % beträgt.

11. Verfahren zur Herstellung der UV-härtbaren Dispersionen auf Polyisocyanatbasis gemäß Anspruch 8 oder 9, **dadurch gekennzeichnet, dass** die Kennzahl des Prepolymeren A) zwischen 0,95:1 bis 1,39:1 liegt.

12. Verwendung der UV-härtbaren Dispersionen auf Polyisocyanatbasis gemäß Anspruch 1 zur Herstellung von Lacken oder Beschichtungen oder Klebstoffe.

13. Bindemittelkombinationen, enthaltend UV-härtbare Dispersionen auf Polyisocyanatbasis gemäß Anspruch 1, sowie eine oder mehrere weitere Dispersionen.

14. Beschichtungsmitttel, enthaltend UV-härtbare Dispersionen auf Polyisocyanatbasis gemäß Anspruch 1, sowie Vernetzer auf Basis von Aminoharzen und/oder Polyisocyanaten und/oder blockierten Polyisocyanaten.

## Claims

1. Aqueous UV-curable polyisocyanate-based dispersions as binders for producing paints, comprising the following components
a) 35 to 75% by weight of a polyisocyanate component a) having a mean functionality of not less than 2.2, consisting of not less than 40% by weight of liquid oligomeric polyisocyanates based on hexamethylene diisocyanate having isocyanurate, biuret, uretdione, carbodiimide and/or iminooxadiazinedione structural units and not more than 60% by weight of isophorone diisocyanate, toluene H6-2,4- and 2,6-diisocyanate, 1,6-hexamethylene diisocyanate, 4,4'-diisocyanatodicyclohexylmethane and/or 2,4'-diisocyanatodicyclohexylmethane and/or 2,2'-diisocyanatodicyclohexylmethane and/or toluene 2,4- and 2,6-diisocyanate, and the reaction products thereof with trimethylolpropane, butanediol, ethylene glycol, diethylene glycol, propylene glycol or neopentyl glycol,
b) 10 to 50% by weight of one or more monohydroxy-functional compounds having (meth)acryloyl groups,
c) 1.5 to 19% by weight of a component c), wherein the component c) comprises at least one component c1) that, on account of (potentially) ionic groups in the structure thereof, has a hydrophilizing action and has at least one further isocyanate-reactive group, and at least one component c2) that has groups having a nonionically hydrophilizing action and contains at least one further isocyanate-reactive group,
d) 0.1 to 10% by weight of one or more di- and/or polyfunctional amines or hydroxyamines as chain extenders, and
e) optionally other monomeric, oligomeric and/or polymeric substances, which may optionally also have further unsaturated groups, selected from low-molecular-weight diols and/or polymer diols or epoxy acrylates, ester acrylates, polyester acrylates and/or products of the reaction of monoepoxides with unsaturated fatty acids,
wherein the stated percentages for a) to d) add up to 100% and the ratio of the equivalents of isocyanate groups in component a) to the sum of the equivalents of isocyanate-reactive hydroxy and/or amino groups in components b), c) and optionally e) is between 0.95:1 and 1.39:1, and wherein the UV-curable polyisocyanate-based dispersions, in consequence of the incorporation of component c), have acid values of 0 to 26 mg KOH/g of substance based on the solids content, the content of urethane groups is in the range from 8 to 30% by weight based on the solids content and the UV-curable polyisocyanate-based dispersions contain less than 5% by weight of organic solvents.

2. Aqueous UV-curable polyisocyanate-based dispersions according to Claim 1, **characterized in that** the polyisocyanate component a) consists of not less than 70% by weight of oligomeric polyisocyanates based on hexamethylene diisocyanate having biuret, iminooxadiazinedione and/or isocyanurate structural units and not more than 30% by weight of isophorone diisocyanate, 4,4'-diisocyanatodicyclohexylmethane and/or 2,4'-diisocyanatodicyclohexylmethane and/or 2,2'-diisocyanatodicyclohexylmethane and/or toluene 2,4- or 2,6-diisocyanate.

3. Aqueous UV-curable polyisocyanate-based dispersions according to Claim 1 or 2, **characterized in that** they contain 0.5 to 40% by weight of component e).

4. Aqueous UV-curable polyisocyanate-based dispersions according to Claim 1 or 2, **characterized in that** they contain, as component e), oligoesters having OH values of 240 to 500 mg KOH/g of substance, in an amount of 0.5 to 25% by weight.

5. Aqueous UV-curable polyisocyanate-based dispersions according to Claim 1, **characterized in that** 2 to 8% by weight of a mixture of salts of 2-(2-aminoethylamino)ethanesulfonic acid and/or of the addition product of diamines with acrylic acid and/or dimethylolpropane are used as component c1) and at least one monohydroxy-functional polyalkylene oxide polyether having a molecular weight of 500 to 1100 g/mol is used as c2).

6. Aqueous UV-curable polyisocyanate-based dispersions according to Claim 1, **characterized in that** linear aliphatic diamines, optionally in combination with triamines, are used as component d) .

7. Aqueous UV-curable polyisocyanate-based dispersions according to Claim 1, **characterized in that** component d) is used in amounts such that the degree of chain extension is between 100% and 200%.

8. Process for producing the UV-curable polyisocyanate-based dispersions according to Claim 1, **characterized in that** an isocyanate-functional prepolymer A) is obtained by reaction of components a), b) and c), optionally together with e), in one or more reaction steps, with an excess of component a), wherein the neutralizing agent for generating the ionic groups necessary for the dispersion may be added before, during or after this production of prepolymer, followed by a chain-extension step through addition of component d), followed by the dispersion step through addition of water to the prepolymer A) or transfer of the prepolymer A) to a container of an aqueous medium.

9. Process for producing the UV-curable polyisocyanate-based dispersions according to Claim 1, **characterized in that** an isocyanate-functional prepolymer A) is obtained by reaction of components b) and c), optionally together with e), in one or more reaction steps, with an excess of component a), wherein the neutralizing agent for generating the ionic groups necessary for the dispersion may be added before, during or after this production of prepolymer, followed by the dispersion step through addition of water to the prepolymer A) or transfer of the prepolymer A) to a container of an aqueous medium, followed by a chain-extension step through addition of component d) .

10. Process for producing the UV-curable polyisocyanate-based dispersions according to Claim 8 or 9, **characterized in that** the degree of chain extension is between 100% and 200%.

11. Process for producing the UV-curable polyisocyanate-based dispersions according to Claim 8 or 9, **characterized in that** the index of prepolymer A) is between 0.95:1 to 1.39:1.

12. Use of the UV-curable polyisocyanate-based dispersions according to Claim 1 for producing paints or coatings or adhesives.

13. Binder combinations comprising UV-curable polyisocyanate-based dispersions according to Claim 1 and also one or more further dispersions.

14. Coating compositions comprising UV-curable polyisocyanate-based dispersions according to Claim 1 and also crosslinkers based on amino resins and/or polyisocyanates and/or blocked polyisocyanates.

## Revendications

1. Dispersions aqueuses durcissables par UV à base de polyisocyanate en tant que liant pour la fabrication de vernis, contenant en tant que composants constitutifs :
a) 35 à 75 % en poids d'un composant polyisocyanate a) ayant une fonctionnalité moyenne d'au moins 2,2, constitué par au moins 40 % en poids de polyisocyanates oligomères liquides à base de diisocyanate d'hexaméthylène contenant des unités isocyanurate, biuret, uretdione, carbodiimide et/ou iminooxadiazinedione, et au plus 60 % en poids de diisocyanate d'isophorone, de diisocyanate de H6-2,4- ou 2,6-toluylidène, de diisocyanate de 1,6-hexaméthylène, de 4,4'-diisocyanato-dicyclohexylméthane et/ou de 2,4'-diisocyanato-dicyclohexylméthane et/ou de 2,2'-diisocyanato-dicyclohexylméthane et/ou de diisocyanate de 2,4- ou 2,6-toluylidène ou leurs produits de réaction avec du triméthylolpropane, du butanediol, de l'éthylène glycol, du diéthylène glycol, du propylène glycol ou du néopentylglycol,
b) 10 à 50 % en poids d'un ou de plusieurs composés à fonction monohydroxy, comprenant des groupes (méth)acryloyle,
c) 1,5 à 19 % en poids d'un composant c), le composant c) contenant au moins un composant c1), qui a une activité hydrophilisante en raison de groupes (potentiellement) ioniques incorporés et comprend au moins un groupe réactif avec les isocyanates supplémentaire, et au moins un composant c2), qui contient des groupes à activité hydrophilisante non ioniques et comprend au moins un groupe réactif avec les isocyanates supplémentaire,
d) 0,1 à 10 % en poids d'une ou de plusieurs amines ou hydroxyamines di- et/ou polyfonctionnelles en tant qu'allongeurs de chaînes, et
e) éventuellement d'autres substances monomères, oligomères et/ou polymères, qui peuvent éventuellement comprendre également des groupes insaturés supplémentaires, choisies parmi les diols de faible poids moléculaire et/ou les diols polymères ou les époxyacrylates, les ester-acrylates, les polyester-acrylates et/ou les produits de réaction de monoépoxydes avec des acides gras insaturés,
la somme des données de pourcentage de a) à d) étant de 100 % et le rapport entre les équivalents des groupes isocyanate du composant a) et la somme des équivalents des groupes hydroxy et/ou amino réactifs avec les isocyanates des composants b), c) et éventuellement e) étant compris entre 0,95:1 et 1,39:1, et les dispersions durcissables par UV à base de polyisocyanates présentant par l'incorporation du composant c) des indices d'acidité de 0 à 26 mg KOH/g de substance, par rapport à la teneur en solides, la teneur en groupes uréthane se situant dans la plage allant de 8 à 30 % en poids, par rapport à la teneur en solides, et les dispersions durcissables par UV à base de polyisocyanate contenant moins de 5 % en poids de solvants organiques.

2. Dispersions aqueuses durcissables par UV à base de polyisocyanate selon la revendication 1, **caractérisées en ce que** le composant polyisocyanate a) est constitué par au moins 70 % en poids de polyisocyanates oligomères à base de diisocyanate d'hexaméthylène contenant des unités biuret, iminooxadiazine-dione et/ou isocyanurate, et au plus 30 % en poids de diisocyanate d'isophorone, de 4,4'-diisocyanatodicyclohexylméthane et/ou de 2,4'-diisocyanatodicyclohexylméthane et/ou de 2,2'-diisocyanatodicyclohexylméthane et/ou de diisocyanate de 2,4- ou 2,6-toluylidène.

3. Dispersions aqueuses durcissables par UV à base de polyisocyanate selon la revendication 1 ou 2, **caractérisées en ce que** celles-ci contiennent 0,5 à 40 % en poids du composant e).

4. Dispersions aqueuses durcissables par UV à base de polyisocyanate selon la revendication 1 ou 2, **caractérisées en ce que** celles-ci contiennent en tant que composant e) des oligoesters ayant des indices OH de 240 à 500 mg de KOH/g, en une quantité de 0,5 à 25 % en poids.

5. Dispersions aqueuses durcissables par UV à base de polyisocyanate selon la revendication 1, **caractérisées en ce que** 2 à 8 % en poids d'un mélange de sels de l'acide 2-(2-amino-éthylamino)-éthanesulfonique et/ou du produit d'addition de diamines avec de l'acide acrylique et/ou de l'acide diméthylolpropionique en tant que composant c1) et au moins un polyoxyde d'alkylène-polyéther à fonction monohydroxy d'un poids moléculaire de 500 à 1 100 g/mol en tant que c2) sont utilisés.

6. Dispersions aqueuses durcissables par UV à base de polyisocyanate selon la revendication , **caractérisées en ce que** des diamines aliphatiques linéaires, éventuellement en combinaison avec des triamines, sont utilisées en tant que composant d).

7. Dispersions aqueuses durcissables par UV à base de polyisocyanate selon la revendication 1, **caractérisées en ce que** le composant d) est utilisé en quantités telles que le degré d'allongement de chaînes soit compris entre 100 % et 200 %.

8. Procédé de fabrication des dispersions durcissables par UV à base de polyisocyanate selon la revendication 1, **caractérisé en ce qu'**un prépolymère à fonction isocyanate A) est obtenu par mise en réaction des composants a), b) et c), éventuellement conjointement avec e), en une ou plusieurs étapes de réaction, avec un excès du composant a), l'agent de neutralisation pour la formation des groupes ioniques nécessaires pour la dispersion pouvant être ajouté avant, pendant ou après cette fabrication d'un prépolymère, suivie par une étape d'allongement de chaînes par ajout du composant d), suivie par l'étape de dispersion par ajout d'eau au prépolymère A) ou transfert du prépolymère A) dans une préparation aqueuse.

9. Procédé de fabrication des dispersions durcissables par UV à base de polyisocyanate selon la revendication 1, **caractérisé en ce qu'**un prépolymère à fonction isocyanate A) est obtenu par mise en réaction des composants b) et c), éventuellement conjointement avec e), en une ou plusieurs étapes de réaction, avec un excès du composant a), l'agent de neutralisation pour la formation des groupes ioniques nécessaires pour la dispersion pouvant être ajouté avant, pendant ou après cette fabrication d'un prépolymère, suivie par l'étape de dispersion par ajout d'eau au prépolymère A) ou transfert du prépolymère A) dans une préparation aqueuse, suivie par une étape d'allongement de chaînes par ajout du composant d).

10. Procédé de fabrication des dispersions durcissables par UV à base de polyisocyanate selon la revendication 8 ou 9, **caractérisé en ce que** le degré d'allongement de chaînes est de 100 à 200 %.

11. Procédé de fabrication des dispersions durcissables par UV à base de polyisocyanate selon la revendication 8 ou 9, **caractérisé en ce que** l'indice caractéristique du prépolymère A) est compris entre 0,95:1 et 1,39:1.

12. Utilisation des dispersions durcissables par UV à base de polyisocyanate selon la revendication 1 pour la fabrication de vernis ou de revêtements ou d'adhésifs.

13. Combinaisons de liants, contenant des dispersions durcissables par UV à base de polyisocyanate selon la revendication 1, ainsi qu'une ou plusieurs dispersions supplémentaires.

14. Agent de revêtement, contenant des dispersions durcissables par UV à base de polyisocyanate selon la revendication 1, ainsi que des agents de réticulation à base de résines amino et/ou de polyisocyanates et/ou de polyisocyanates bloqués.
